**Europäisches Patentamt**

**European Patent Office**

**Office européen des brevets**

(19)

(11) Veröffentlichungsnummer: **0 343 653 B1**

# EUROPÄISCHE PATENTSCHRIFT

(12)

(45) Veröffentlichungstag der Patentschrift:
24.07.91 Patentblatt 91/30

(51) Int. Cl.$^5$: **B28D 1/14**

(21) Anmeldenummer: **89109420.3**

(22) Anmeldetag: **24.05.89**

(54) **Fräswerkzeug und Verfahren zum Ausfräsen zylindrischer Bohrlöcher.**

(30) Priorität: **27.05.88 DE 3818079**

(43) Veröffentlichungstag der Anmeldung:
**29.11.89 Patentblatt 89/48**

(45) Bekanntmachung des Hinweises auf die
Patenterteilung:
**24.07.91 Patentblatt 91/30**

(84) Benannte Vertragsstaaten:
**AT BE CH DE ES FR GB GR IT LI LU NL SE**

(56) Entgegenhaltungen:
**DE-A- 3 020 143**
**DE-A- 3 024 656**
**DE-A- 3 137 938**
**GB-A- 1 434 173**
**US-A- 4 635 737**

(73) Patentinhaber: **PLICA WERKZEUGFABRIK AG**
**Zinggenstrasse 4**
**CH-8753 Mollis (CH)**

(72) Erfinder: **Runge, Erich**
**Zollstockweg 50**
**W-7118 Künzelsau (DE)**

(74) Vertreter: **Bunke, Holger, Dr.rer.nat.**
**Dipl.-Chem. et al**
**Patentanwälte Prinz, Leiser, Bunke & Partner**
**Manzingerweg 7**
**W-8000 München 60 (DE)**

## Beschreibung

Die Erfindung betrifft ein im wesentlichen kreiszylindrisches Fräswerkzeug, insbesondere für Handbohrmaschinen und Bohrhämmer, mit einem zur Aufnahme in ein Bohrfutter geeigneten Schaft, einem Fräskopf und mit einem in radialer Richtung verschwenkbaren Schneidwerkzeug, wobei der Fräskopf in axialer Richtung verschiebbar mit dem Schaft verbunden ist, mindestens eine sich in axialer Richtung erstreckende Ausnehmung aufweist und aus einer selbsttätig eingenommenen Entspannungsstellung in eine Spannstellung aufschiebbar ist, und wobei das Schneidwerkzeug in der Entspannungsstellung des Fräskopfs vollständig in der Ausnehmung versenkt ist, während es in der Spannstellung des Fräskopfs in radialer Richtung über die Mantelfläche des Fräskopfs hinausragt.

Die Erfindung betrifft ferner ein Verfahren zum Ausfräsen zylindrischer Bohrlöcher unter Bildung konischer Erweiterungen bzw. Hinterschneidungen für die Aufnahme von Spreizkonus-Ankern.

Aus Sicherheitsgründen werden Schwerlastanker, wie sie z.B. zur Befestigung von Fassadenplatten an Betonwänden oder Mauerwerk verwendet werden, nicht mehr nur in zylindrische Bohrlöcher, sondern in konisch hinterschnittene Bohrlöcher eingesetzt, wobei die Hinterschneidung an einen Konusbolzen des Ankers angepaßt wird, um durch Auftreiben der Ankerhülse auf den Konusbolzen nicht nur eine Spreizung der Ankerhülse in radialer Richtung, sondern auch ein Festklemmen des Konusbolzens im konisch hinterschnittenen Bereich des ausgefrästen Bohrlochs und damit höhere Auszugswerte in axialer Richtung zu erreichen.

Es ist bereits bekannt, zylindrische Bohrlöcher mit Hilfe eines konischen Bohrers oder Fräsers zu hinterschneiden, und zwar unter Verwendung eines zur Aufnahme in das Bohrfutter einer Handbohrmaschine oder eines Bohrhammers geeigneten Schwenkschaftes, auf den unter Zwischenschaltung einer Feder und einer Druckhülse eine Zentrierhülse aufgesetzt ist, die einen Fräskopf, der das eigentliche Fräswerkzeug trägt, aufnimmt. Der Schwenkschaft und die Zentrierhülse können mit einem Bohrsauger zur Absaugung des Bohrmehls kombiniert sein. Die gewünschte konische Hinterschneidung des zylindrischen Bohrlochs wird nun durch kreisförmiges Schwenken der Handbohrmaschine bzw. des Bohrhammers unter gleichzeitigem axialem Druck erzeugt.

Diese bekannte Methode besitzt eine ganze Reihe von gravierenden Nachteilen : Der Ort und die geometrische Form der Hinterschneidung hängt vom manuellen Geschick des Benutzers des Fräswerkzeugs ab. Ein maßgenaues, dem verwendeten Anker exakt angepaßtes Hinterschneiden ist nicht planmäßig, sondern nur zufällig möglich, weil sich Ort und geometrische Form der Hinterschneidung ändern, je nachdem, wie groß der manuell auf das Werkzeug aufgebrachte axiale Druck ist und in welchem Radius, wie gleichmäßig und wie oft die Bohrmaschine bzw. der Bohrhammer kreisförmig verschwenkt werden.

Ein besonders gravierender Nachteil der bekannten Methode besteht darin, daß der Anwender von außen nicht erkennen kann, ob die von ihm erzeugte Hinterschneidung ausreicht oder nicht, ob also der Konus des Ankerbolzens in die konische Hinterschneidung paßt oder ob die Hinterschneidung noch zu klein oder bereits zu groß ist.

Schließlich kann die Zentrierhülse des bekannten Fräswerkzeugs nicht nur bei abgenutztem Bohrer mit zu kleinem Schneideneckmaß, sondern auch bei neuwertigen Bohrern im Bohrloch festklemmen. Sie muß dann durch kräftiges, ruckartiges axiales Zurückziehen der abgeschalteten Maschine gelöst werden, was leicht zu Beschädigungen führen kann, wenn das ruckartige Zurückziehen nicht genau axial erfolgt.

Aus DE-U-69 17 790 ist ein Fräswerkzeug der eingangs genannten Gattung bekannt. Bei diesem bekannten Fräswerkzeug ist der Fräskopf von seinem vorderen Ende her geschlitzt, um innerhalb des durch den Schlitz gebildeten Hohlraums das um eine Achse radial verschwenkbare Schneidwerkzeug sowie eine der Rückstellung des Schneidwerkzeugs dienende Druckfeder unterbringen zu können. Das Schneidwerkzeug weist einen Nocken auf, der bei einer Axialverschiebung zwischen Schaft und Fräskopf von der vorderen Stirnwand des Schaftes gegen die Wirkung der erwähnten Druckfeder in Richtung auf das Vorderende des Fräskopfes bewegt wird. Hierdurch dreht sich das Schneidwerkzeug um seine Befestigungsachse, und die Schneidkante wird radial nach außen verschwenkt, ragt also in radialer Richtung über die Mantelfläche des Fräskopfs hinaus. Bei axialer Entlastung, z.B. beim Herausziehen des Werkzeugs aus dem Bohrloch, wird das Schneidwerkzeug unter der Einwirkung der im Inneren des Fräskopfs angebrachten Druckfeder in seine ursprüngliche Lage zurückgeschwenkt, in der das Schneidwerkzeug vollständig in dem Schlitz des Fräskopfs versenkt ist.

Ein ähnliches Fräswerkzeug ist auch aus der DE-A-3 024 656 bekannt.

Dieses bekannte Fräswerkzeug ermöglicht zwar die Herstellung einer vom Einfluß individueller, manueller Tätigkeit des Anwenders unabhängige, örtlich und räumlich exakt definierte, konische Hinterschneidung, aber das Werkzeug hat sich in der Praxis nicht bewährt. Der mechanisch am stärksten belastete Teil, nämlich der Fräskopf, wird durch den erforderlichen Schlitz, der das gesamte Schneidwerkzeug und die zu seiner Rückholung erforderliche Feder aufnehmen muß, so sehr mechanisch geschwächt, daß die erforderliche Verschleißfestigkeit und Lebensdauer nicht erreicht wird. Vor allem aber setzt sich der durch den Schlitz im

2

Fräskopf gebildete Hohlraum, der offen in die zylindrische Führung für den Schaft innerhalb des Fräskopfs übergeht, sehr schnell mit Bohrmehl zu, so daß sich die beweglichen Teile innerhalb kürzester Zeit überhaupt nicht mehr bewegen lassen, sofern sie nicht vor und nach jedem Fräsvorgang sorgfältig gereinigt werden. Das in die zylindrische Führung für den Schaft im Inneren des Fräskopfs eindringende Bohrmehl wirkt darüber hinaus wie ein Schleifmittel und führt zu übermäßigem Abrieb an den für die Funktionsfähigkeit des Fräswerkzeugs empfindlichsten Stellen.

Der Erfindung liegt deshalb die Aufgabe zugrunde, ein verbessertes Fräswerkzeug zu schaffen, mit dem es gelingt, einerseits eine vom Einfluß individueller, manueller Tätigkeit des Anwenders unabhängige, örtlich und räumlich exakt definierte, konische Hinterschneidung herzustellen, andererseits aber die Gefahr des Festklemmens des Werkzeugs im Bohrloch und des Festklemmens beweglicher Teile innerhalb des Werkzeugs durch eindringendes Bohrmehl auszuschließen oder mindestens stark zu vermindern und gleichzeitig die Wartungs- und Bedienungsfreundlichkeit und die Lebensdauer des Werkzeugs zu erhöhen.

Der Erfindung liegt ferner die Aufgabe zugrunde, ein Verfahren zum Ausfräsen zylindrischer Bohrlöcher unter Bildung konischer Erweiterungen bzw. Hinterschneidungen zu schaffen, mit dem Ort und geometrische Form der Hinterschneidungen zuverlässiger als bisher in vorherbestimmbarer Weise unter Ausschluß individueller, manueller Einflußnahme in jederzeit wiederholbarer Weise erreicht werden können.

Diese Aufgabe wird bei einem Fräswerkzeug der eingangs genannten Gattung erfindungsgemäß dadurch gelöst, daß der Fräskopf als Ausnehmung mindestens eine sich in axialer Richtung erstreckende Längsnut und der Schaft mindestens ein sich in axialer Richtung erstreckendes, in die Längsnut eingreifendes und ihr angepaßtes Führungsglied aufweist, daß das Schneidwerkzeug an das Führungsglied angelenkt ist und daß das Schneidwerkzeug auf einer vom Grund der Längsnut zur Mantelfläche des Fräskopfs ansteigenden Fläche gleitend beweglich abgestützt ist.

Erfindungsgemäß wird also auf die Verwendung eines Schwenkschafts verzichtet, wodurch individuelle, manuelle Einflußmöglichkeiten des Anwenders auf Ort und geometrische Form der zu bildenden Hinterschneidung völlig ausgeschlossen werden. Da das Schneidwerkzeug in der definierten Entspannungsstellung des Fräskopfs des erfindungsgemäßen Fräswerkzeugs nicht radial über den Umfang des Fräskopfs hinausragt, tritt während des Einschiebens des Fräswerkzeugs in ein vorgebohrtes zylindrisches Bohrloch keine Fräswirkung ein. Erst wenn das Vorderende des Fräskopfs gegen die kegelförmige "Vorderwand" des zylindrischen Bohrlochs stößt und der Schaft unter axialem Druck in Richtung auf den Fräskopf axial verschoben wird, tritt das Schneidwerkzeug, das auf der ansteigenden Abstützfläche entlanggleitet, aus der Mantelfläche des Fräskopfs radial in immer steigendem Maße hervor, bis der Fräskopf, relativ zum Schaft, seine definierte Spannstellung erreicht hat, über die hinaus eine weitere Axialverschiebung nicht mehr möglich ist und die gleichzeitig die maximale Auslenkung des Schneidwerkzeugs in radialer Richtung definiert. Der vom Anwender aufgebrachte Axialdruck bewirkt weder eine örtliche Verlagerung der Hinterschneidung noch eine Veränderung der geometrischen Form der Hinterschneidung ; er kann sich allenfalls auf die Geschwindigkeit auswirken, mit der die Hinterschneidung an der konstruktionsbedingt vorgegebenen Stelle und mit der vorgegebenen geometrischen Form gebildet wird.

Der Fräskopf des erfindungsgemäßen Fräswerkzeugs weist keinen durchgehenden Schlitz und keinen die mechanische Stabilität beeinträchtigenden Hohlraum auf, sondern nur eine Längsnut verhältnismäßig geringer Tiefe. Der Fräskopf weist auch keine Innenbohrung auf, die zur Führung des Schaftes gebraucht würde. Aus diesen Gründen kann kein Bohrmehl in das Innere des Fräskopfes eindringen. Da sich sämtliche empfindlichen beweglichen Teile im Inneren des Schaftes befinden und beim Fräsen einer konischen Hinterschneidung außerhalb des zylindrischen Bohrlochs verbleiben, ist es beim erfindungsgemäßen Fräswerkzeug völlig ausgeschlossen, daß sich die beweglichen Teile durch Eindringen des Bohrmehls festsetzen oder verklemmen oder durch die abrasive Wirkung des Bohrmehls beschädigt oder verschlissen werden. Ein weiterer Vorteil des erfindungsgemäßen Fräswerkzeugs besteht schließlich darin, daß die Dimensionen des Schneidwerkzeugs den Dimensionen der Längsnut im Fräskopf angepaßt sind, was nicht nur eine besonders einfache und kostengünstige Herstellung ermöglicht, sondern auch eine leichte Zugänglichkeit und Wartung des Schneidwerkzeugs. Schließlich kann bei der erfindungsgemäßen Bauart auf jede Art von zusätzlicher Feder im Inneren des Fräskopfes zwecks Rückholung des ausgeschwenkten Schneidwerkzeugs in seine Ruheposition verzichtet werden.

Es ist für den Fachmann ohne weiteres ersichtlich, daß das erfindungsgemäße Fräswerkzeug durch entsprechende Dimensionierung des Schneidwerkzeugs, der Längsnut im Fräskopf und der ansteigenden Fläche zur Abstützung des Schneidwerkzeugs der Form und Größe des Konus jedes handelsüblichen Schwerlastankers angepaßt werden kann. Zu jedem Ankertyp und jeder Ankergröße kann somit ein dafür passendes Fräswerkzeug bereitgehalten werden, wobei die Zuordnung von Fräswerkzeug und Anker durch geeignete farbliche oder sonstige Markierungen erleichtert werden kann.

Vorzugsweise ist der Fräskopf des erfindungsgemäßen Fräswerkzeugs gegen die Wirkung einer Druck-

3

feder aus der Entspannungsstellung in die Spannstellung axial verschiebbar, so daß der Fräskopf, relativ zum Schaft gesehen, stets selbsttätig unter der Einwirkung der Federkraft dieser Druckfeder in die Entspannungsstellung zurückkehrt, sobald auf das Fräswerkzeug kein axialer Druck von außen ausgeübt wird, wobei gleichzeitig das über das Führungsglied mit dem Schaft verbundene, auf der ansteigenden Fläche gleitend beweglich abgestützte Schneidwerkzeug ebenfalls selbsttätig unter der Einwirkung der Federkraft der Druckfeder gegen den Fräskopf in seine Ausgangs- oder Ruhestellung zurückkehrt, in der es vollständig in der Längsnut des Fräskopfs versenkt ist, also nicht über die Mantelfläche des Fräskopfs hinausragt.

Der Schaft weist vorzugsweise eine Bohrung auf, deren Längsachse mit der Längsachse des Fräswerkzeugs zusammenfällt und in der die Druckfeder angeordnet ist. Es sind jedoch auch Ausführungsformen denkbar, bei denen anstelle oder neben einer solchen zentralen Bohrung mehrere ringförmig angeordnete Längsbohrungen im Schaft vorgesehen sind, in die jeweils eine Spiralfeder eingesetzt ist. Entscheidend ist nur, daß Fräskopf und Schaft axial gegeneinander verschiebbar sind und daß die genannten beiden Teile selbsttätig in ihre Ausgangsstellung zurückkehren, sobald auf das Fräswerkzeug kein axialer Druck ausgeübt wird. Bei einer vorteilhaften Ausführungsform der Erfindung ist ferner vorgesehen, daß der Fräskopf einen in seiner Längsachse liegenden Führungsbolzen trägt, der in der zentralen Längsbohrung des Schafts geführt ist und auf den die Druckfeder einwirkt. Diese Ausführungsform gewährleistet einerseits eine sichere axiale Verschiebbarkeit des Fräskopfs und des Schafts gegeneinander und stellt außerdem eine verschleißfeste und wartungsfreundliche Konstruktion dar, weil der Fräskopf mit Hilfe des Führungsbolzens, aber auch die Druckfeder, besonders einfach ausgetauscht werden können.

Vorzugsweise weist der Schaft ein sich in axialer Richtung erstreckendes, durch die Bohrung führendes Langloch und der in der Bohrung geführte Führungsbolzen seinerseits mindestens eine Bohrung auf, deren Längsachse quer zur Längsachse des Führungsbolzens und in der Symmetrieebene des Langlochs verläuft, wobei in die in dem Führungsbolzen befindliche Bohrung ein Stift eingesetzt ist, der in dem Langloch geführt ist und einen Anschlag bildet und damit die Entspannungsstellung des Fräskopfes definiert. Das Langloch stellt dabei nichts anderes als eine Führung für den Stift dar und trägt gleichzeitig zur verwindungsfreien Führung von Fräskopf und Schaft bei ihrer Relativbewegung in axialer Richtung bei.

Die mindestens eine Bohrung im Führungsbolzen des Fräskopfs weist vorteilhaft ein Innengewinde auf, während der Stift als Gewindestift ausgebildet ist, so daß der durch das Langloch des Schaftes stets frei zugängliche Gewindestift lediglich herausgeschraubt werden muß, um den Fräskopf vom Schaft zu trennen, falls ein neuer Fräskopf aufgesetzt oder die Druckfeder erneuert werden soll.

Wenn im Führungsbolzen des Fräskopfes mehrere Bohrungen vorgesehen sind, kann die Strecke, um die Fräskopf und Schaft relativ zueinander in axialer Richtung verschoben werden können, verändert werden, je nachdem, in welche dieser Bohrungen der einen Anschlag bildende Stift bzw. Gewindestift eingesetzt bzw. eingeschraubt wird. Da diese Strecke bzw. der Betrag der axialen Verschiebbarkeit mit der Bewegung des Schneidwerkzeugs auf der ansteigenden Fläche des Fräskopfs zusammenhängt, läßt sich durch Veränderung des Betrages der axialen Verschiebbarkeit auch das Maß der Auslenkung des Schneidwerkzeugs in radialer Richtung und damit die Tiefe der zu bildenden Hinterschneidung verändern.

Eine weitere vorteilhafte Ausführungsform des erfindungsgemäßen Fräswerkzeugs ist dadurch gekennzeichnet, daß das freie Ende des Führungsgliedes und das Schneidwerkzeug jeweils etwa die halbe Breite der Längsnut aufweisen. Auf diese Weise lassen sich das freie Ende des Führungsgliedes und das Schneidwerkzeug nebeneinander innerhalb der Längsnut unterbringen, wobei das freie Ende des Führungsgliedes gleichzeitig eine stabile seitliche Halterung für das Schneidwerkzeug auch und gerade dann darstellt, wenn das Schneidwerkzeug in der Spannstellung des Fräskopfes seine maximale Auslenkung in radialer Richtung erfährt.

Vorzugsweise ist das Schneidwerkzeug mittels eines eine Drehachse bildenden Bolzens an das freie Ende des Führungsgliedes oder an eine Seitenwand der Längsnut des Fräskopfs angelenkt, je nachdem, ob die vom Grund der Längsnut zur Mantelfläche des Fräskopfs ansteigende Fläche, auf der das Schneidwerkzeug gleitend beweglich abgestützt ist, vom Schaftende her gesehen, in Richtung auf das Vorderende des Fräskopfs bis zur Mantelfläche ansteigt oder umgekehrt vom Vorderende des Fräskopfs her gesehen in Richtung auf das Schaftende zur Mantelfläche des Fräskopfs ansteigt. Im ersteren Falle entsteht eine Hinterschneidung, deren größter Durchmesser in der maximal möglichen Tiefe des zylindrischen Bohrlochs liegt, während im zweiten Falle eine Hinterschneidung entsteht, deren maximaler Durchmesser vom im Inneren des Mauerwerks liegenden Ende des zylindrischen Bohrlochs nach rückwärts, zum Eingang des Bohrlochs hin verschoben ist.

Bei einer weiteren vorteilhaften Ausführungsform des erfindungsgemäßen Fräswerkzeugs weist der Schaft eine dem Fräskopf zugewandte Stirnfläche und der Fräskopf eine dem Schaft zugewandte Stirnfläche auf, welche gemeinsam einen Anschlag bilden und die Spannstellung des Fräskopfs definieren. Hierdurch wird die Handhabung des Fräswerkzeugs besonders einfach und sicher : Das Fräswerkzeug braucht bei dieser Ausführung lediglich in das vorgebohrte zylindrische Bohrloch eingeführt zu werden, bis das Vorderende des Fräs-

4

kopfs am Ende des Bohrlochs anstößt, und unter dem vom Anwender ausgeübten axialen Druck wird der Schaft in axialer Richtung so lange gegen den Fräskopf verschoben, bis die Stirnfläche des Schaftes an der Stirnfläche des Fräskopfs anliegt. Diese Stellung der beiden relativ zueinander in axialer Richtung verschiebbaren Teile definiert die Spannstellung des Fräskopfs und damit gleichzeitig die maximale Auslenkung des Schneidwerkzeugs in radialer Richtung. Sobald die beiden Stirnflächen aufeinandertreffen, ist die gewünschte Hinterschneidung am konstruktionsbedingt vorbestimmten Ort und in der vorbestimmten geometrischen Form fertiggestellt, ohne daß es einer irgendwie gearteten Kontrolle bedarf. Da eine weitere Axialverschiebung über den durch die beiden Stirnflächen gebildeten Anschlag hinaus nicht möglich ist, entlastet der Anwender das Werkzeug, wodurch der Fräskopf selbsttätig unter der Einwirkung der Druckfeder wieder seine Entspannungsstellung einnimmt und gleichzeitig das Schneidwerkzeug auf den Grund der Längsnut im Fräskopf zurückkehrt, so daß das Fräswerkzeug aus dem Bohrloch herausgezogen werden kann, ohne daß die Gefahr des Festklemmens besteht.

Gemäß einer weiteren vorteilhaften Ausführungsform weist der Fräskopf ein selbstzentrierendes, verjüngtes Vorderende, vorzugsweise in Form eines Linsenkopfes, auf. Hierdurch wird erreicht, daß die zu bildende Hinterschneidung koaxial mit dem vorgebohrten zylindrischen Bohrloch ausgebildet wird.

Vorzugsweise ist das Schneidwerkzeug des erfindungsgemäßen Fräswerkzeugs eine Hartmetallplatte, deren eine Schmalseite derart abgeschrägt ist, daß ihre innere Längskante länger als die äußere Längskante ist. Die Abschrägung bewirkt, daß die Hartmetallplatte selbst dann bei der Rückkehr des Fräskopfs in die Entspannungsstellung bzw. beim Herausziehen des Werkzeugs aus dem Bohrloch leicht auf den Grund der Längsnut im Fräskopf zurückfällt, wenn die Drehbarkeit der Hartmetallplatte um den eine Drehachse bildenden Bolzen durch Bohrmehl beeinträchtigt ist.

Der Schaft weist vorzugsweise ein verjüngtes rückwärtiges Ende zur Einführung in ein Spannfutter oder eine Bohreraufnahme einer Bohrmaschine auf, um die universelle Verwendbarkeit im Zusammenhang mit allen gängigen, auf dem Markt befindlichen Bohrmaschinen und Bohrhämmern zu gewährleisten.

Das rückwärtige Ende des Schafts kann in an sich bekannter Weise mindestens eine Drehmitnahmenut und mindestens eine sich in axialer Richtung erstreckende Aufnahmenut für einen Verriegelungskörper eines Schnellspannfutters aufweisen.

Wenn die Stirnfläche des verjüngten rückwartigen Endes des Schaftes eine unter axialer Krafteinwirkung verformbare Erhebung aufweist, kann an einem gebrauchten Fräswerkzeug leicht festgestellt werden, ob es falsch, d.h. z.B. mit eingeschaltetem Hammerwerk eines Bohrhammers, betätigt wurde. Die Erhebung dient somit als Garantie-Kontrollmarke. Bei Betätigung des Hammerwerks eines Bohrhammers wird die Erhebung verformt. Die verformbare Erhebung kann spitz oder rund auslaufen ; sie kann beispielsweise kegel- oder kegelstumpfförmig sein. Die Erhebung kann aufgelötet oder auf andere Weise aufgesetzt oder angedreht sein und kann aus Metall oder Kunststoff bestehen. Die Erhebung kann auch durch das herausragende Ende eines in das Schaftende eingesetzten Stiftes gebildet sein.

Ferner kann der Fräskopf in seiner Mantelfläche eine gewindegangartig verlaufende Nut zum Herausfördern von Bohrmehl aus dem Bohrloch aufweisen.

Schließlich kann das erfindungsgemäße Fräswerkzeug mit einer zusätzlichen, an sich bekannten Bohrmehl-Absaugeinrichtung, z.B. einem Bohrsauger mit Saugschlauchanschluß, kombiniert werden.

Das erfindungsgemäße Verfahren zum Ausfräsen zylindrischer Bohrlöcher unter Bildung konischer Erweiterungen bzw. Hinterschneidungen für die Aufnahme von Spreizkonus-Ankern ist schließlich durch die Verwendung des erfindungsgemäßen Fräswerkzeugs gekennzeichnet.

Die Erfindung wird nachfolgend anhand der Zeichnung weiter erläutert.

Fig. 1     ist eine Draufsicht auf eine Ausführungsform eines in seiner Entspannungsstellung befindlichen Fräswerkzeugs gemäß der Erfindung ;

Fig. 2     ist eine Draufsicht auf das im Uhrzeigersinn (vom Fräskopf aus gesehen) um 90° gedrehte Fräswerkzeug gemäß Fig. 1 ;

Fig. 3     ist eine Draufsicht auf einen Schnitt nach Linie A-B in Fig. 1 in der um 90° gedrehten Lage gemäß Fig. 2 ;

Fig. 4     ist eine Draufsicht auf einen Teil einer zweiten Ausführungsform des erfindungsgemäßen Fräswerkzeugs, ebenfalls in der Entspannungsstellung, die sich von der ersten Ausführungsform gemäß den Fig. 1 bis 3 hinsichtlich der Anordnung des Schneidwerkzeugs unterscheidet ;

Fig. 5     ist eine Draufsicht auf einen Schnitt nach Linie C-D in Fig. 4, wobei das Schneidwerkzeug jedoch im Uhrzeigersinn (vom Fräskopf aus gesehen) um 90° gedreht ist ;

Fig. 6     ist eine Draufsicht auf den Schnitt gemäß Fig. 5, jedoch in der Spannstellung des Fräskopfs ;

Fig. 7     zeigt schematisch, teils als Draufsicht, teils im Schnitt, die erste Ausführungsform des erfindungsgemäßen Fräswerkzeugs gemäß Fig. 1 in der Entspannungsstellung, wobei das Werkzeug in das Bohrfutter einer Bohrmaschine eingespannt und der Fräskopf in ein vorgebohrtes zylindrisches Bohrloch eingeführt ist ; und

Fig. 8    ist eine Teildraufsicht auf das Fräswerkzeug gemäß Fig. 7, jedoch im Uhrzeigersinn (vom Fräskopf aus gesehen) um 90° gedreht und unmittelbar vor Erreichen der Spannstellung des Fräskopfs.

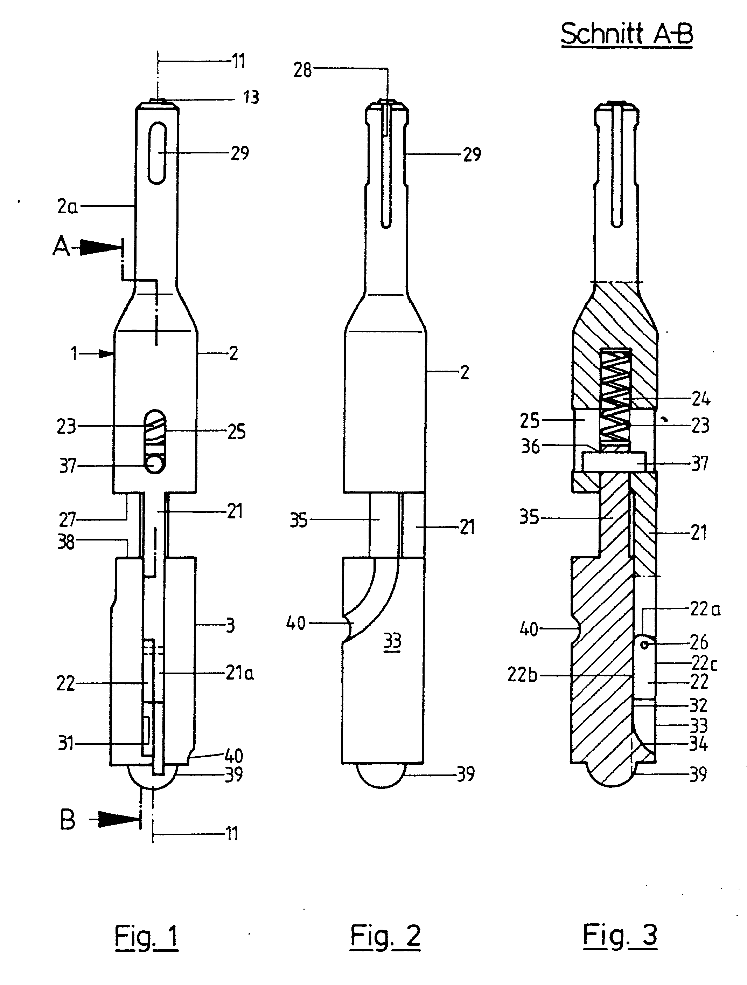

Bei der ersten Ausführungsform des erfindungsgemäßen Fräswerkzeugs gemäß den Figuren 1 bis 3 besteht das aus verschleißfestem Werkzeugstahl hergestellte, im wesentlichen kreiszylindrische Fräswerkzeug 1 aus dem Schaft 2 und dem Fräskopf 3 als den beiden Hauptteilen, die in Richtung der Längsachse 11 relativ zueinander verschiebbar sind.

Der Schaft 2 besitzt ein verjüngtes Ende 2a, das zur Aufnahme in das Spannfutter einer herkömmlichen Handbohrmaschine oder eines Bohrhammers geeignet ist. Bei dem gezeichneten Ausführungsbeispiel gemäß den Figuren 1 bis 3 ist das rückwärtige verjüngte Ende 2a des Schafts 2 zur Aufnahme in ein Schnellspannfutter einer solchen Maschine ausgebildet ; hierzu weist das verjüngte Schaftende 2a mindestens eine in axialer Richtung verlaufende Drehmitnahmenut 28 (Fig. 2 und 3) und mindestens eine sich in axialer Richtung erstreckende Aufnahmenut 29 zur Aufnahme eines Verriegelungskörpers eines Schnellspannfutters auf. Die Stirnfläche des verjüngten rückwärtigen Endes 2a des Schaftes 2 weist eine aufgelötete oder angedrehte Erhebung 13 auf, die, insbesondere unter axialer Krafteinwirkung, verformbar ist und als Garantie-Kontrollmarke dient.

Der Schaft 2 besitzt eine zentrale Bohrung 24 (Fig. 3), deren Längsachse mit der Längsachse 11 des Fräswerkzeugs 1 zusammenfällt. In die Bohrung 24 ist eine als Spiralfeder ausgebildete Druckfeder 23 eingesetzt. Die Bohrung 24 dient gleichzeitig als Führung für einen Führungsbolzen 35, der mit dem Fräskopf 3 fest, gegebenenfalls lösbar, verbunden ist, wobei der Führungsbolzen 35 in der Längsachse des Fräskopfs 3 angeordnet ist.

In dem Schaft 2 befindet sich außerdem ein den Schaft vollständig in einer die Längsachse 11 enthaltenden Ebene durchsetzendes Langloch 25, das sich in axialer Richtung erstreckt und auch durch die zentrale Bohrung 24 hindurchführt (Fig. 1 und 3) und das eine Führung für einen Stift 37 (Fig. 3) darstellt, der in eine Bohrung 36 des Führungsbolzens 35 eingesetzt ist. Der Stift 37 stellt einen Anschlag für die unter der Einwirkung der Druckfeder 23 bei Fehlen eines von außen aufgebrachten axialen Drucks selbsttätig erfolgende axiale Verschiebung des Fräskopfs 3 dar und definiert so gleichzeitig die in den Figuren 1 bis 3 dargestellte Entspannungsstellung des Fräskopfs 3 und damit des gesamten Werkzeugs 1.

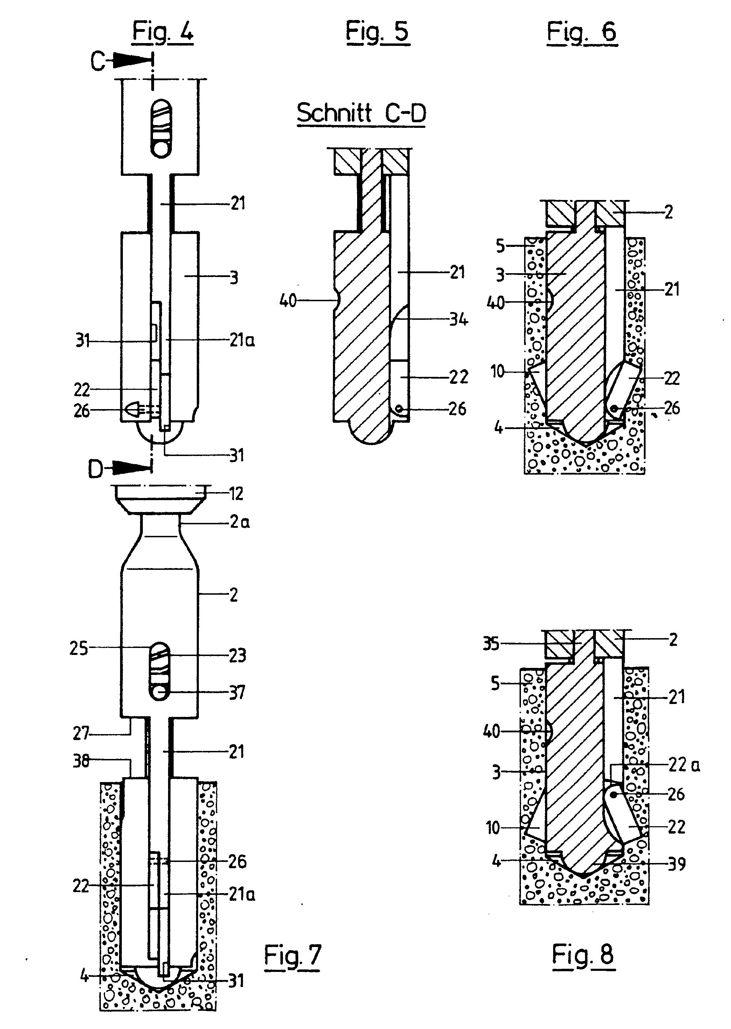

Unter der Einwirkung eines äußeren, auf das verjüngte Ende 2a des Schaftes 2 aufgebrachten axialen Drucks läßt sich unter Überwindung der Federkraft der Druckfeder 23, sofern der Fräskopf 3 beispielsweise in einem Bohrloch in axialer Richtung ortsfest gehalten wird, der Schaft 2 solange in axialer Richtung verschieben, bis die ebene Stirnfläche 27 des Schafts 2 an der ebenen Stirnfläche 38 des Fräskopfs 3 anschlägt (vgl. Fig. 8). Bei dieser Axialverschiebung dringt der Führungsbolzen 35 in die Bohrung 24 weiter ein und drückt die Spiralfeder 23 zusammen, wobei der Stift 37 im Langloch 25 in Richtung auf das verjüngte rückwärtige Ende 2a des Schaftes 2 verschoben wird.

In dem Führungsbolzen 35 können mehrere hintereinanderliegende, parallel verlaufende Bohrungen, 36, die ein Innengewinde tragen können, vorgesehen sein, so daß der Stift 37, der als Gewindestift mit Schraubenkopf ausgebildet sein kann, einen verstellbaren Anschlag bildet, je nachdem, in welche der Bohrungen 36 der Stift 37 eingesetzt wird. Auf diese Weise läßt sich zum einen die Vorspannung der Druckfeder 23 und zum anderen der Abstand zwischen den beiden Stirnflächen 27 und 38 in der Entspannungsstellung je nach den Bedürfnissen verschieden einstellen.

Der Fräskopf 3 besitzt mindestens eine sich in axialer Richtung erstreckende Längsnut 31, die vorzugsweise in die Mantelfläche 33 des im wesentlichen kreiszylindrischen Fräskopfs 3 eingeschnitten ist. Der Schaft 2 besitzt mindestens ein sich in axialer Richtung erstreckendes, in die Längsnut 31 eingreifendes und ihr angepaßtes Führungsglied 21, an dem ein Schneidwerkzeug 22 angelenkt ist, das auf einer vom Grund 32 der Längsnut 31 zur Mantelfläche 33 des Fräskopfs 3 ansteigenden, vorzugsweise gekrümmten, Fläche 34 (Fig. 3) gleitend beweglich abgestützt ist.

Bei der oben beschriebenen axialen Verschiebung des Schafts 2 in Richtung auf den Fräskopf 3 verschiebt sich auch das Führungsglied 21, das Bestandteil des Schafts 2 ist und das wie ein Finger oder eine Schubstange über die Stirnfläche 27 hinausragt, wodurch das Schneidwerkzeug 22, das vorzugsweise als Hartmetallplatte ausgebildet und mittels eines eine Drehachse bildenden Bolzens 26 an das freie Ende 21a des Führungsgliedes 21 angelenkt ist, innerhalb der Längsnut 31 in Richtung auf das Vorderende 39 des Fräskopfs 3 gleitet.

Das freie Ende 21a des Führungsglieds 21 und das Schneidwerkzeug 22 besitzen jeweils etwa die halbe Breite der Längsnut 31 (Fig. 1), so daß das Schneidwerkzeug 22 stets möglichst großflächig an der Seitenwand des verjüngten freien Endes 21a des Führungsgliedes 21 abgestützt ist.

Da das Schneidwerkzeug 22 auf der vom Grund 32 der Längsnut 31 zur Mantelfläche 33 des Fräskopfs 3 ansteigenden Fläche 34 abgestützt ist, bewegt sich das Schneidwerkzeug 22 um den als Drehachse fungierenden Bolzen 26 in radialer Richtung, also quer zur Längsachse 11 des Fräswerkzeugs 1, sobald der Schaft 2 und der Fräskopf 3 in axialer Richtung aufeinander zubewegt werden. Der durch die Stirnflächen 27 und 38 gebildete Anschlag definiert somit sowohl die Spannstellung des Fräskopfs 3 als auch die maximale Auslenkung des Schneidwerkzeugs 22, bei der dieses radial über die Mantelfläche 33 des Fräskopfs 3 hinausragt (Fig. 8).

Vorzugsweise ist eine Schmalseite 22a der als Schneidwerkzeug 22 verwendeten Hartmetallplatte derart abgeschrägt, daß ihre innere Längskante 22b länger ist als die äußere Längskante 22c. Das eingeschnittene, verkürzte freie Ende 21a des Führungsglieds 21 ist vorzugsweise der Abschrägung der Hartmetallplatte 22 entsprechend angepaßt (Fig. 3), damit beim Übergang von der Spannstellung (Fig. 8) in die Entspannungsstellung (Fig. 1 bis 3) das Schneidwerkzeug 22 auch dann leicht und problemlos in seine ursprüngliche Lage, bei der es vollständig in der Längsnut 31 versenkt ist, zurückkehrt, wenn sich Bohrmehl in der Nut 31 befindet.

Schließlich ist in die Mantelfläche 33 des Fräskopfs 3 vorzugsweise eine gewindegangartig verlaufende Nut 40 zum Herausfördern von Bohrmehl aus dem Bohrloch eingeschnitten (Fig. 2 und 8).

Bei einer zweiten Ausführungsform des erfindungsgemäßen Fräswerkzeugs gemäß den Figuren 4 bis 6 sind gleiche Teile mit gleichen Bezugszahlen versehen. Die zweite Ausführungsform unterscheidet sich von der ersten lediglich dadurch, daß die vom Grund 32 der Längsnut 31 zur Mantelfläche 33 des Fräskopfs 3 ansteigende, vorzugsweise gekrümmte, Fläche 34 nicht in Richtung auf das Vorderende 39 des Fräskopfs 3 ansteigt, sondern umgekehrt vom Vorderende 39 in Richtung auf den Schaft 2 ansteigt. Um nun die radiale Auswärtsbewegung des Schneidwerkzeugs 22 bei der axialen Verschiebung des Schafts 2 in Richtung auf den Fräskopf 3 zu erreichen, ist das Schneidwerkzeug 22 bei dieser zweiten Ausführungsform in der Seitenwand der Nut 31 des Fräskopfs 3 mit Hilfe des Bolzens 26 und nicht am Führungsglied 21 oder dessen verjüngtem Ende 21a angelenkt.

Bei beiden Ausführungsformen ist das Vorderende 39 des Fräskopfs 3 vorzugsweise selbstzentrierend und verjüngt ausgebildet, beispielsweise in Form eines Linsenkopfes.

Bei der Anwendung des erfindungsgemäßen Fräswerkzeugs bzw. bei dem erfindungsgemäßen Verfahren wird so vorgegangen, daß vorab in üblicher Weise eine zylindrische Bohrung 4 in Beton oder Mauerwerk 5 (Fig. 6 und 7) erstellt wird. Das in das Schnellspannfutter 12 einer Handbohrmaschine oder eines Bohrhammers eingespannte erfindungsgemäße Fräswerkzeug (Fig. 7) wird in die zylindrische Bohrung 4 eingeführt und unter gleichzeitigem axialem Druck in Rotation versetzt. Dabei bewegt sich der Schaft 2, wie oben beschrieben, in axialer Richtung so lange auf den Fräskopf 3 zu, bis die Stirnflächen 27 und 38 aufeinandertreffen. Während der Axialverschiebung bewegt sich gleichzeitig das Schneidwerkzeug 22 radial nach außen, wodurch die konische Erweiterung bzw. Hinterschneidung 10 (Fig. 6 und 8) entsteht. Das Erreichen des durch die Stirnflächen 27 und 38 gebildeten Anschlags, d.h. das Erreichen der Spannstellung, bedeutet gleichzeitig, daß die maximale radiale Auslenkung des Schneidwerkzeugs 22 erreicht ist und damit auch die Hinterschneidung 10 in der konstruktionsbedingt vorgegebenen geometrischen Form und an dem konstruktionsbedingt vorgegebenen Ort gebildet worden ist, so daß der für die hinterschnittene Bohrung bestimmte Konusanker nach dem Abschalten der Bohrmaschine und dem Herausziehen des Werkzeugs problemlos eingeführt werden kann und absolut paßgenau sitzt, so daß der maximal erreichbare Auszugswert des Ankers auch tatsächlich erreicht wird. Das beim Ausfräsen entstandene Bohrmehl wird einerseits durch die Nut 40 aus der Bohrung hinausgefördert und zum anderen durch einen gegebenenfalls zusätzlich an dem Fräswerkzeug angebrachten, handelsüblichen Bohrsauger entfernt. Vorzugsweise wird die Bohrung 4 etwas kürzer (weniger tief) erstellt, als der Länge des Fräskopfs 3 von der Spitze bis zur Stirnfläche 38 entspricht (vgl. Fig. 6 - 8) ; das beim Ausfräsen entstehende Bohrmehl läßt sich dann leichter abführen.

Ein für den praktischen Gebrauch bedeutsamer Vorteil des erfindungsgemäßen Fräswerkzeugs besteht darin, daß der Fräskopf 3 und das Schneidwerkzeug 22 bei etwaigen Beschädigungen oder beim Übergang auf größere oder kleinere Bohrungsdurchmesser oder andere Formen der gewünschten Hinterschneidungen leicht ausgetauscht werden können, wobei kein Spezialwerkzeug, sondern lediglich ein Schraubendreher erforderlich ist. Es muß nämlich lediglich der Stift 37, der durch das Langloch 25 im Schaft 2 frei zugänglich ist, entfernt werden, um den Fräskopf 3 abnehmen bzw. den Führungsbolzen 35 aus der Bohrung 24 herausziehen zu können. Hierbei wird gleichzeitig das Führungsglied 21 aus der Nut 31 gezogen, so daß der Bolzen 26, mit dem das Schneidwerkzeug 22 befestigt ist, ebenfalls frei liegt und gegebenenfalls herausgezogen oder herausgeschraubt werden kann, falls die Hartmetallplatte erneuert werden soll. Wenn der Fräskopf 3 abgenommen wurde, ist auch die Druckfeder 23 frei zugänglich und kann gewünschtenfalls ebenfalls ausgetauscht werden. Anschließend wird der gegebenenfalls ausgetauschte Fräskopf 3 mit seinem Führungsbolzen 35 wieder in die Bohrung 24 eingesetzt und soweit gegen die Feder 23 gedrückt, bis die Bohrung 36 im Langloch 25 sichtbar wird, so daß der Stift 37 durch das Langloch 25 in die Bohrung 36 eingesetzt und befestigt bzw. festgeschraubt werden kann.

7

EP 0 343 653 B1

Weitere Abwandlungen und äquivalente Ausführungsformen der Erfindung sind im Rahmen und im Umfang der Patentansprüche möglich.

**Patentansprüche**

1. Im wesentlichen kreiszylindrisches Fräswerkzeug (1), insbesondere für Handbohrmaschinen und Bohrhämmer, mit einem zur Aufnahme in ein Bohrfutter geeigneten Schaft (2), einem Fräskopf (3) und mit einem in radialer Richtung verschwenkbaren Schneidwerkzeug (22), wobei der Fräskopf (3) in axialer Richtung verschiebbar mit dem Schaft (2) verbunden ist, mindestens eine sich in axialer Richtung erstreckende Ausnehmung aufweist und aus einer selbsttätig eingenommenen Entspannungsstellung in eine Spannstellung aufschiebbar ist, und wobei das Schneidwerkzeug (22) in der Entspannungsstellung des Fräskopfs (3) vollständig in der Ausnehmung versenkt ist, während es in der Spannstellung des Fräskopfs (3) in radialer Richtung über die Mantelfläche (33) des Fräskopfs (3) hinausragt, dadurch gekennzeichnet, daß der Fräskopf (3) als Ausnehmung mindestens eine sich in axialer Richtung erstreckende Längsnut (31) und der Schaft (2) mindestens ein sich in axialer Richtung erstreckendes, in die Längsnut (31) eingreifendes und ihr angepaßtes Führungsglied (21) aufweist, daß das Schneidwerkzeug (22) an das Führungsglied (21) angelenkt ist und daß das Schneidwerkzeug (22) auf einer vom Grund (32) der Längsnut (31) zur Mantelfläche (33) des Fräskopfs (3) ansteigenden Fläche (34) gleitend beweglich abgestützt ist.

2. Fräswerkzeug nach Anspruch 1, dadurch gekennzeichnet, daß der Fräskopf (3) gegen die Wirkung einer Druckfeder (23) aus der Entspannungsstellung in die Spannstellung axial verschiebbar ist.

3. Fräswerkzeug nach Anspruch 1 oder 2, dadurch gekennzeichnet, daß der Schaft (2) eine Bohrung (24) aufweist, deren Längsachse mit der Längsachse (11) des Fräswerkzeugs (1) zusammenfällt und in der die Druckfeder (23) angeordnet ist.

4. Fräswerkzeug nach Anspruch 3, dadurch gekennzeichnet, daß der Fräskopf (3) einen in seiner Längsachse liegenden Führungsbolzen (35) trägt, der in der Bohrung (24) geführt ist und auf den die Druckfeder (23) einwirkt.

5. Fräswerkzeug nach Anspruch 4, dadurch gekennzeichnet, daß der Schaft (2) ein sich in axialer Richtung erstreckendes, durch die Bohrung (24) führendes Langloch (25) aufweist, daß der in der Bohrung (24) geführte Führungsbolzen (35) mindestens eine Bohrung (36) aufweist, deren Längsachse quer zur Längsachse des Führungsbolzens (35) und in der Symmetrieebene des Langlochs (25) verläuft, und daß in die Bohrung (36) ein Stift (37) eingesetzt ist, der in dem Langloch (25) geführt ist und einen Anschlag bildet und die Entspannungsstellung des Fräskopfs (3) definiert.

6. Fräswerkzeug nach Anspruch 5, dadurch gekennzeichnet, daß die mindestens eine Bohrung (36) im Führungsbolzen (35) ein Innengewinde aufweist und daß der Stift (37) ein Gewindestift ist.

7. Fräswerkzeug nach einem der Ansprüche 1 bis 6, dadurch gekennzeichnet, daß das freie Ende (21a) des Führungsgliedes (21) und das Schneidwerkzeug (22) jeweils etwa die halbe Breite der Längsnut (31) aufweisen.

8. Fräswerkzeug nach Anspruch 7, dadurch gekennzeichnet, daß das Schneidwerkzeug (22) mittels eines eine Drehachse bildenden Bolzens (26) an das freie Ende (21a) des Führungsgliedes (21) oder an eine Seitenwand der Längsnut (31) des Fräskopfs (3) angelenkt ist.

9. Fräswerkzeug nach einem der Ansprüche 1 bis 8, dadurch gekennzeichnet, daß das Schneidwerkzeug (22) eine Hartmetallplatte ist, deren eine Schmalseite (22a) derart abgeschrägt ist, daß ihre innere Längskante (22b) länger als die äußere Längskante (22c) ist.

10. Fräswerkzeug nach einem der Ansprüche 1 bis 9, dadurch gekennzeichnet, daß der Schaft (2) eine dem Fräskopf (3) zugewandte Stirnfläche (27) und der Fräskopf (3) eine dem Schaft (2) zugewandte Stirnfläche (38) aufweisen, welche gemeinsam einen Anschlag bilden und die Spannstellung des Fräskopfs (3) definieren.

11. Fräswerkzeug nach einem der Ansprüche 1 bis 10, dadurch gekennzeichnet, daß der Fräskopf (3) ein selbstzentrierendes, verjüngtes Vorderende (39) aufweist.

12. Fräswerkzeug nach Anspruch 11, dadurch gekennzeichnet, daß das Vorderende (39) des Fräskopfs (3) die Form eines Linsenkopfes aufweist.

13. Fräswerkzeug nach einem der Ansprüche 1 bis 12, dadurch gekennzeichnet, daß der Schaft (2) ein verjüngtes rückwärtiges Ende (2a) zur Einführung in ein Spannfutter oder eine Bohreraufnahme einer Bohrmaschine bzw. eines Bohrhammers aufweist.

14. Fräswerkzeug nach Anspruch 13, dadurch gekennzeichnet, daß das rückwärtige Ende (2a) des Schafts (2) mindestens eine Drehmitnahmenut (28) und mindestens eine sich in axialer Richtung erstreckende Aufnahmenut (29) für einen Verriegelungskörper eines Schnellspannfutters aufweist.

15. Fräswerkzeug nach einem der Ansprüche 1 bis 14, dadurch gekennzeichnet, daß die Stirnfläche des

8

verjüngten rückwärtigen Endes (2a) des Schaftes (2) eine verformbare Erhebung (13) aufweist.

16. Fräswerkzeug nach einem der Ansprüche 1 bis 15, dadurch gekennzeichnet, daß der Fräskopf (3) in seiner Mantelfläche (33) eine gewindegangartig verlaufende Nut (40) zum Herausfördern von Bohrmehl aus dem Bohrloch (4) aufweist.

17. Fräswerkzeug nach einem der Ansprüche 1 bis 16, gekennzeichnet durch eine zusätzliche Bohrmehl-Absaugeinrichtung.

18. Verfahren zum Ausfräsen zylindrischer Bohrlöcher unter bildung konischer Erweiterungen bzw. Hinterschneidungen für die Aufnahme von Spreizkonus-Ankern, gekennzeichnet durch die Verwendung des Fräswerkzeugs gemäß einem der Ansprüche 1 bis 17.

## Claims

1. Substantially cylindrical milling tool (1), in particular for hand drills and hammer drills, comprising a shank (2) adapted for reception in a drill chuck, a milling head (3) and a cutting tool (22) pivotal in radial direction, the milling head (3) being connected axially displaceably to the shank (2), having at least one recess extending in axial direction and being adapted to be pushed from an automatically assumed relief position into a tensioned position, and in the relief position of the milling head (3) the cutting tool (22) is completely sunk in the recess whereas in the tensioned position of the milling head (3) said tool projects in radial direction beyond the outer surface (33) of the milling head (3), characterized in that the milling head (3) comprises as recess at least one longitudinal groove (31) extending in axial direction and the shank (2) comprises at least one guide member (21) which extends in the axial direction, engages into the longitudinal groove (31) and is adapted thereto, that the cutting tool (22) is articulately connected to the guide member (21) and that the cutting tool (22) is supported slidingly movably on a surface (34) rising from the bottom (32) of the longitudinal groove (31) to the outer surface (33) of the milling head (3).

2. Milling tool according to claim 1, characterized in that the milling head (3) is axially displaceable against the action of a pressure spring (23) out of the relief position into the tensioned position.

3. Milling tool according to claim 1 or 2, characterized in that the shank (2) comprises a bore (24) the longitudinal axis of which coincides with the longitudinal axis (11) of the milling tool (1) and in which the pressure spring (23) is arranged.

4. Milling tool according to claim 3, characterized in that the milling head (3) carries a guide bolt (35) which lies in its longitudinal axis, which is guided in the bore (24) and on which the pressure spring (23) acts.

5. Milling tool according to claim 4, characterized in that the shank (2) comprises an axially extending slot (25) leading through the bore (24), that the guide bolt (35) guided in the bore (24) comprises in turn at least one bore (36) of which the longitudinal axis extends transversely of the longitudinal axis of the guide bolt (35) and in the plane of symmetry of the slot (25), and that into the bore (36) a pin (37) is inserted which is guided in the slot (25) and forms a stop and thus defines the relief position of the milling head (3).

6. Milling tool according to claim 5, characterized in that the at least one bore (36) in the guide bolt (35) comprises an internal thread and that the pin (37) is a threaded pin.

7. Milling tool according to any one of claims 1 to 6, characterized in that the free end (21a) of the guide member (21) and the cutting tool (22) each have about half the width of the longitudinal groove (31).

8. Milling tool according to claim 7, characterized in that the cutting tool (22) is articulately connected by means of a bolt (26) forming a rotational axis to the free end (21a) of the guide member (21) or to a side wall of the longitudinal groove (31) of the milling head (3).

9. Milling tool according to any one of claims 1 to 8, characterized in that the cutting tool (22) is a cemented carbide tip of which one narrow side (22a) is bevelled in such a manner that its inner longitudinal edge (22b) is longer than the outer longitudinal edge (22c).

10. Milling tool according to any one of claims 1 to 9, characterized in that the shank (2) comprises an end face (27) facing the milling head (3) and the latter comprises an end face (38) facing the shank (2), which form together a stop and define the tensioned position of the milling head (3).

11. Milling tool according to any one of claims 1 to 10, characterized in that the milling head (3) has a self-centring tapered front end (39).

12. Milling tool according to claim 11, characterized in that the front end (39) of the milling head (3) has the form of an oval or lens head.

13. Milling tool according to any one of claims 1 to 12, characterized in that the shank (2) has a tapered rear end (2a) for introduction into a chuck or a bit socket of a drill or percussion drill.

14. Milling tool according to claim 13, characterized in that the rear end (2a) of the shank (2) comprises at least one rotational entraining groove (28) and at least one axially extending receiving groove (29) for a locking body of a quick-action chuck.

15. Milling tool according to any one of claims 1 to 14, characterized in that the end face of the tapered rear end (2a) of the shank (2) has a deformable protrusion (13).

16. Milling tool according to any one of claims 1 to 15, characterized in that the milling head (3) comprises in its outer surface (33) a groove (40) extending in the manner of thread flights for conveying drilling dust out of the drill hole (4).

17. Milling tool according to any one of claims 1 to 16, characterized by an additional drilling dust suction extraction device.

18. Method for reaming cylindrical drill holes to form conical widenings or undercuttings for receiving expansion cone anchor bolts, characterized by the use of the milling tool according to any one of claims 1 to 17.


## Revendications

1. Outil à fraiser (1) de forme sensiblement cylindrique circulaire, en particulier pour perceuses à main et marteaux perforateurs, comportant une tige (2) destinée à être introduite dans un mandrin porte-outil, une tête de fraisage (3) et un outil de coupe (22) pivotant radialement, la tête de fraisage (3) étant reliée à la tige (2) de manière à pouvoir se déplacer axialement, présentant au moins un évidement de direction axiale et pouvant être poussée d'une position relâchée qu'elle occupe automatiquement à une position contrainte, l'outil de coupe (22) étant complètement escamoté dans l'évidement lorsque la tête de fraisage (3) est en position relâchée, et dépassant radialement de la surface extérieure (33) de la tête de fraisage (3) lorsque la tête de fraisage (3) est en position contrainte, caractérisé en ce que la tête de fraisage (3) présente au moins une rainure longitudinale (31) de direction axiale faisant office d'évidement et la tige (2) au moins un élément de guidage (21) de direction axiale, s'engageant dans la rainure longitudinale (31) à laquelle il est adapté, en ce que l'outil de coupe (22) est articulé sur l'élément de guidage (21) et en ce que l'outil de coupe (22) s'appuie de manière mobile et coulissante sur une surface (34) qui s'élève à partir du fond (32) de la rainure longitudinale (31) jusqu'à la surface extérieure (33) de la tête de fraisage (3)

2. Outil à fraiser selon la revendication 1, caractérisé en ce que la tête de fraisage (3) peut coulisser axialement de la position relâchée à la position contrainte contre l'action d'un ressort de compression (23).

3. Outil à fraiser selon l'une des revendications 1 ou 2, caractérisé en ce que la tige (2) présente un alésage (24) dont l'axe longitudinal coïncide avec l'axe longitudinal (11) de l'outil à fraiser (1) et dans lequel est disposé le ressort de compression (23).

4. Outil à fraiser selon la revendication 3, caractérisé en ce que la tête de fraisage (3) porte une broche de guidage (35) située dans son axe longitudinal, qui est guidée dans l'alésage (24) et sur laquelle agit le ressort de compression (23).

5. Outil à fraiser selon la revendication 4, caractérisé en ce que la tige (2) présente un trou oblong (25) qui s'étend en direction axiale et qui traverse l'alésage (24), en ce que la broche de guidage (35) guidée dans l'alésage (24) présente au moins un alésage (36) dont l'axe longitudinal est perpendiculaire à l'axe longitudinal de la broche de guidage (35) et se trouve dans le plan de symétrie du trou oblong (25), et en ce que dans l'alésage (36) est insérée une goupille (37) qui est guidée dans le trou oblong (25), constitue une butée et définit la position relâchée de la tête de fraisage (3).

6. Outil à fraiser selon la revendication 5, caractérisé en ce que l'alésage (36) de la broche de guidage (35) est taraudé et en ce que la goupille (37) est une goupille filetée.

7. Outil à fraiser selon l'une des revendications 1 à 6, caractérisé en ce que l'extrémité libre (21a) de l'élément de guidage (21) et l'outil de coupe (22) ont chacun sensiblement la moitié de la largeur de la rainure longitudinale (31).

8. Outil à fraiser selon la revendication 7, caractérisé en ce que l'outil de coupe (22) est articulé au moyen d'un boulon (26) formant pivot à l'extrémité libre (21a) de l'élément de guidage (21) ou à une paroi latérale de la rainure longitudinale (31) de la tête de fraisage (3).

9. Outil à fraiser selon l'une des revendications 1 à 8, caractérisé en ce que l'outil de coupe (22) est une plaque de métal dur dont l'un (22a) des petits côtés est biseauté de telle façon que son bord longitudinal intérieur (22b) est plus long que le bord longitudinal (22c) extérieur.

10. Outil à fraiser selon l'une des revendications 1 à 9, caractérisé en ce que la tige (2) présente une face frontale (27) tournée vers la tête de fraisage (3) et la tête de fraisage (3) une face frontale (38) tournée vers la tige (2), lesdites faces (27, 38) formant ensemble une butée et définissant la position contrainte de la tête de fraisage (3).

11. Outil à fraiser selon l'une des revendications 1 à 10, caractérisé en ce que la tête de fraisage (3) présente une extrémité avant (39) à centrage automatique et de section réduite.

EP 0 343 653 B1

12. Outil à fraiser selon la revendication 11, caractérisé en ce que l'extrémité avant (39) de la tête de fraisage (3) a la forme d'une tête bombée.

13. Outil à fraiser selon l'une des revendications 1 à 12, caractérisé en ce que la tige (2) présente une extrémité arrière (2a) de section réduite destinée à être introduite dans le mandrin de serrage ou le porte-mèche d'une perceuse ou d'un marteau perforateur.

14. Outil à fraiser selon la revendication 13, caractérisé en ce que l'extrémité arrière (2a) de la tige (2) présente au moins une rainure (28) d'entraînement en rotation et au moins une rainure (29) de positionnement s'étendant axialement destinée à un corps de verrouillage d'un mandrin à serrage rapide.

15. Outil à fraiser selon l'une des revendications 1 à 14, caractérisé en ce que la surface frontale de l'extrémité arrière de section réduite (2a) de la tige (2) présente une partie surélevée (13) déformable.

16. Outil à fraiser selon l'une des revendications 1 à 15, caractérisé en ce que la tête de fraisage (3) présente dans sa surface extérieure (33) une rainure en spirale (40) permettant d'évacuer la poussière de perçage hors du trou de perçage (4).

17. Outil à fraiser selon l'une des revendications 1 à 16, caractérisé par un dispositif supplémentaire d'aspiration de la poussière de perçage.

18. Procédé de fraisage de trous de perçage cylindriques par formation d'élargissements ou de contre-dépouilles coniques destinés à recevoir des moyens d'ancrage coniques à expansion, caractérisé par l'utilisation de l'outil à fraiser selon l'une des revendications 1 à 17.

11

Schnitt A-B

Fig. 1

Fig. 2

Fig. 3

## Fig. 4

## Fig. 5

## Fig. 6

### Schnitt C-D